# EUROPÄISCHE PATENTSCHRIFT

(11) **EP 3 485 250 B1**
(45) Veröffentlichungstag und Bekanntmachung des Hinweises auf die Patenterteilung: **30.12.2020**
(21) Anmeldenummer: 17745241.4
(22) Anmeldetag: 18.07.2017
(51) Int. Cl.: G01N 11/06, G01N 1/20, G01N 1/10, B29C 48/92

(54) **VERFAHREN UND VORRICHTUNG ZUR ONLINEBESTIMMUNG DER VISKOSITÄT EINES POLYMERS**
METHOD AND DEVICE FOR ONLINE DETERMINATION OF THE VISCOSITY OF A POLYMER
PROCÉDÉ ET DISPOSITIF DE DÉTERMINATION EN DIRECT DE LA VISCOSITÉ D'UN POLYMÈRE

(30) Priorität: 18.07.2016 AT 506382016
(43) Veröffentlichungstag der Anmeldung: 22.05.2019
(73) Patentinhaber: EREMA Engineering Recycling Maschinen und Anlagen Gesellschaft m.b.H., 4052 Ansfelden (AT)
(72) Erfinder: SOCHOR, Sebastian, 4491 Niederneukirchen (AT); SCHIEDER, Florian, 4531 Kematen a.d. Krems (AT)
(74) Vertreter: Wildhack & Jellinek
(86) Internationale Anmeldenummer: PCT/AT2017/060178
(87) Internationale Veröffentlichungsnummer: WO 2018/014060

(56) Entgegenhaltungen:
- GB-A- 1 111 499
- US-A- 3 360 986
- US-A- 3 526 126
- US-A1- 2006 254 344

## Beschreibung

Die Erfindung betrifft ein Verfahren gemäß dem Oberbegriff des Patentanspruchs 1 und ferner eine Messvorrichtung zur Durchführung des Verfahrens gemäß dem Oberbegriff des Patentanspruchs 9.

Aus der US 3360986 A ist eine einschlägige Messvorrichtung zur Onlinebestimmung der Viskosität eines sich in einer Verarbeitung befindlichen, in teigiger bis flüssiger Form vorliegenden Polymers bekannt. Bei dieser Messvorrichtung ist eine an eine Aufschmelzeinheit anschließbare, von einer Rohrleitung gebildete Entnahmeeinheit zur Entnahme von Chargen des in teigiger bis flüssiger Form vorliegenden Polymers vorgesehen, wobei die Entnahmeeinheit über eine Absperreinheit an eine Messeinheit angeschlossen ist, die eine Messdüse aufweist. Durch diese Messeinheit ist die dem Messvolumen zugeführte Charge zur Gänze oder zu einem vorgegebenen Teil durch Druckbelastung mit einem Druckkraftgeber aus dem Messvolumen auspressbar. Ferner sind eine Zeitmesseinheit zur Messung der Zeitdauer des Auspressens der vorgegebenen Menge an Polymer durch die Messdüse, sowie eine Steuereinheit vorhanden, die zur Betätigung der Absperreinheit und des Druckkraftgebers, mit der die Absperreinheit zu vorgegebenen Zeiten in Öffnungs- oder Schließstellung verstellbar ist, womit der Durchfluss von Polymer zum Messvolumen steuerbar und dieses Polymer zu Spül- oder Messzwecken einsetzbar ist, vorgesehen ist. Die Messdüse ist in einem Bereich des Messvolumens gelegen, der dem Druckkraftgeber gegenüberliegt. Ferner betrifft die Erfindung eine Messvorrichtung zur Onlinebestimmung der Viskosität eines sich in einer Verarbeitung, insbesondere Extrusion, befindlichen, in teigiger bis flüssiger Form vorliegenden Polymers zur Durchführung des Verfahrens. Es wird die Schergeschwindigkeit aus der Zeitdauer für das Auspressen des vorbestimmten Volumens der Charge berechnet, wobei die Schubspannung schon bekannt ist. Über eine Spülung des Messvolumens wird keine Aussage getroffen.

Bei der Verarbeitung von Polymeren, insbesondere von thermoplastischen Polymeren, ist das Wissen über die Eigenschaften, insbesondere um deren viskose Eigenschaften, von hoher Bedeutung. Wenn Polymere hinsichtlich ihrer viskosen Eigenschaften bewertet werden sollen, gibt es auf die unterschiedlichen Polymere abgestimmte Bewertungsverfahren, die in einem hohen Maß offline, also meist im Labor, durchgeführt werden. Es ist aber von immer größerer Bedeutung diese Eigenschaften direkt im bzw. während des Verarbeitungsprozess(es) zu erfassen. Üblicherweise und insbesondere bei zu rezyklierenden Polymeren werden diese Polymere vorbehandelt, zumeist in einen Schneidebehälter mit Werkzeugen zerkleinert und aufbereitet. Ein Schmelzen findet dabei noch nicht statt, sondern während der Verweilzeit in diesem Behälter erfolgt eine Erwärmung bzw. ein Erweichen. Von diesem Behälter wird das vorbehandelte Material zum Aufschmelzen einem Extruder zugeführt.

Die Verarbeitung von Polymeren beinhaltet somit in der Regel einen Extrusionsprozess. Dabei wird das Polymer meist vollständig aufgeschmolzen und es kann durch unterschiedliche bekannte Verfahren die Viskosität bestimmt werden.

Viele der bekannten Online-Messsysteme werden durch Verunreinigungen limitiert. Diese Systeme arbeiten vielfach mit kleinen Schmelzepumpen, die Spaltmaße im Bereich von 20 µm aufweisen. Beim Polyolefinrecycling sind je nach Endapplikation Verschmutzungen von 100µm bis 1000µm in der Schmelze üblich. In solch einer Umgebung sind die bekannten Systeme nicht dauerstandsfest.

Aufgabe der vorliegenden Erfindung ist die Erstellung einer einfach aufgebauten und dauerstandfesten betriebssicheren Messvorrichtung und eines exakte Messwerte liefernden Verfahrens zur "online"- Viskositätsbestimmung. Insbesondere sollen Langzeitmessungen ohne Unterbrechung der Verarbeitung des Polymers möglich sein.

Zur Lösung dieser Aufgabe sind die Merkmale des Anspruchs 1 vorgesehen, nämlich,
- dass der ermittelte Messwert für die Berechnung der Viskosität des Polymers herangezogen wird, und
- dass das zum Spülen eingesetzte Polymer aus dem Messvolumen über einen an das Messvolumen angeschlossenen Ableitkanal abgeleitet wird, wobei die Mündung der von einer Rohrleitung gebildeten Entnahmeeinheit und die Mündung des Ableitkanals an entgegengesetzten Endbereichen des Messvolumens angeordnet werden.

Eine erfindungsgemäße Messvorrichtung gemäß des Kennzeichens des Patentanspruchs 9 ist dadurch gekennzeichnet, dass eine Auswerteeinheit zur Berechnung der Viskosität aus dem erhaltenen Zeitmesswert vorgesehen ist, dass an das Messvolumen ein Ableitkanal für zum Spülen eingesetztes Polymer angeschlossen ist, und dass die Mündung der Rohrleitung der Entnahmeeinheit und die Mündung des Ableitkanals an entgegengesetzten Endbereichen des Messvolumens liegen.

Durch das zwischen den Messungen erfolgende Spülen wird eine Dauerverarbeitung des Polymers und laufende Bestimmung der Viskositätswerte möglich. Die Messwerte werden nicht durch Ablagerungen in der Messvorrichtung, Rückstände vorangehender Messungen und Verunreinigungen, insbesondere im Messvolumen, beeinflusst.

Das vorbestimmte Volumen der zu vermessenden Charge kann nach vollständigem Ausbringen des zur Reinigung eingesetzten Polymers aus dem Messvolumen bzw. dem Kolbenzylinder in das Messvolumen eingebracht werden. Die auf den Kolben wirkende Kraft wird während der Kolbenbewegung nicht durch Ablagerungen oder Verklumpungen beeinflusst bzw. verändert.

Der Spülvorgang ist rasch und effizient durchführbar, wenn das dem Messvolumen zum Spülen zugeführte Polymer aus dem Messvolumen durch die Messdüse und/oder zumindest einen, vorzugsweise im oberen Bereich des Messvolumens oder in dem der Messdüse gegenüberliegenden Endbereich des Messvolumens gelegenen, Ableitkanal abgeleitet wird. Der Spülvorgang ist einfach in das Messverfahren zu integrieren, wenn das zum Spülen eingesetzte Polymer durch den Druck dem Messvolumen zugeführt wird, den es bei seiner Verarbeitung an seiner Abzweigstelle besitzt. Für die Messung ist vorgesehen, dass bei Beendigung des Spülvorganges die Zufuhr des Polymers zum Messvolumen gestoppt und entweder weiteres Polymer abgezweigt und dem Messvolumen zugeführt und durch die Messdüse ausgepresst wird oder als zu vermessende Charge das noch im Messvolumen befindliche Polymer des Spülvorganges als abgezweigte Charge durch die Messdüse ausgepresst und die Zeitdauer des Auspressens gemessen wird.

Abhängig von der Temperatur und dem Erweichungsgrad des Polymers wird vorgesehen, dass das Messvolumen und gegebenenfalls der Ableitkanal mit einer Menge an Polymer gespült wird, die größer als das Volumen des Messvolumens und des von der Abzweigstelle bis zum Messvolumen führenden Zuleitungskanals ist und gegebenenfalls zumindest doppelt so groß ist wie diese beiden Volumen zusammen.

Die Erfindung betrifft somit ein Verfahren zur Verarbeitung, insbesondere zur Recycling-Verarbeitung, eines Polymers, wobei das Polymer aufgeschmolzen wird und eine Onlinebestimmung der Viskosität des Polymers erfolgen kann. Dabei ist es von Vorteil, wenn die ermittelten Messwerte für die Steuerung des Verarbeitungsverfahrens, insbesondere des Aufschmelzvorganges des Polymers, und/oder der Steuerung des Extruders, insbesondere seiner Drehzahl, verwendet werden, wobei gegebenenfalls eine Beeinflussung eines nachgeordneten Schmelzeventils oder einer nachgeordneten Granulatweiche vorgenommen wird und das erzeugte Polymer entsprechend seiner Viskosität ausgeschieden oder sortiert wird. Eine vorteilhaft dazu geeignete Messvorrichtung ist der Messvorrichtung bzw. der Aufschmelzeinheit in Form einer Granulatweiche oder eines Schmelzventils nachgeordnet, der bzw. dem das hinsichtlich seiner Viskosität zu vermessene Polymer zuführbar ist.

Ein konstruktiv einfacher Aufbau, der rasche und exakte Messungen zulässt, wobei gleichzeitig das Messvolumen rasch und gut gespült und insbesondere von zurückgebliebenen Verunreinigungen leicht befreit werden kann, ergibt sich, wenn die Mündung der Rohrleitung der Entnahmeeinheit und die Mündung des Ableitkanals an entgegengesetzten Endbereichen des Messvolumens liegen und/oder die Messdüse und die Mündung des Ableitkanals in einander vertikal entgegengesetzten Endbereichen des Messvolumens angeordnet sind.

Eine definierte Steuerung des Spülvorganges und Messvorganges wird durch eine exakte Schaltung der Absperreinheit erreicht und/oder dadurch, dass die Mündung des Ableitkanals von dem Kolben des Druckkraftgebers zu Beginn der Bewegung des Kolbens in das Messvolumen verschließbar ist. Der Kolben verschließt den Ableitkanal und nach Abschluss des Ableitkanals kann der Messvorgang bzw. das Auspressen durch die Messdüse beginnen.

In der Zeichnung ist schematisch eine erfindungsgemäße Messvorrichtung dargestellt.
- Fig. 1: zeigt die erfindungsgemäße Messvorrichtung mit einem Kolben in oberer Endstellung.
- Fig. 2: zeigt die Messvorrichtung mit in das Messvolumen eingefahrenem Kolben.

Wie aus der Zeichnung ersichtlich, ist an eine Verarbeitungseinheit 100 des Polymers, vorzugsweise ein Extruder, eine Rohrleitung 1 angeschlossen zur Entnahme des in zumindest teigiger bis flüssiger Form vorliegenden Polymers 10 in vorgegebenen Mengen bzw. zur chargenweisen Entnahme.

An die als Entnahmeeinheit dienende Rohrleitung 1, in der eine Absperreinheit 2, z.B. Stellventil, angeordnet ist, ist ein Messvolumen 40 angeschlossen, das eine Messdüse 3 aufweist, durch welche Messdüse 3 eine vorgegebene Menge einer das Messvolumen 40 füllenden Charge durch Belastung der Charge mittels eines Druckstempels bzw. Kolbens 6 auspressbar ist. Ferner sind eine Messeinheit 21 zur Messung der Zeitdauer des Auspressens der Charge durch die Messdüse 3 und eine Auswerteeinheit 29 zur Berechnung der Viskosität aus den erhaltenen Zeitmesswerten vorgesehen. Alternativ könnte auch der vom Kolben 6 in einer vorgegebenen Zeiteinheit zurückgelegte Weg zur Bestimmung der Menge des durch die Messdüse 3 ausgepressten Polymers 10 gemessen werden.

Es wird somit an einer wählbaren Stelle des Extrusionssystems bzw. der Aufschmelzeinheit 5, an welcher Stelle das zu verarbeitende Polymer oder entsprechende Polymergemisch in transportierbarer Form vorliegt, das Messgerät 12 zur Viskositätsbestimmung direkt an das Extrusionssystem bzw. die Aufschmelzeinheit 5 bzw. die Entnahmeeinheit angeschlossen und das fließfähige Polymer 10 zur Vermessung in das Messgerät 12 geleitet.

Das Messgerät 12 umfasst im Wesentlichen die Zeitmesseinheit 21, die Entnahmeeinheit mit der Rohrleitung 1 und die Absperreinheit 2, z.B. ein Absperrventil. Die Entnahmeeinheit kann unterschiedlich ausgebildet werden; wesentlich ist, dass das Polymer möglichst einfach und rasch zum Messvolumen 40 geleitet werden kann. Das Absperrventil 2 liegt zwischen dem Extrusionssystem und dem Messvolumen 40 in der Rohrleitung 1. Die Dimensionierung und Ausführung der erfindungsgemäßen Messvorrichtung werden so gewählt, dass die Beeinflussung der entnommenen Charge des Polymers 10 durch Verweilzeit, Temperatur usw. so gering wie möglich ist, um eine dem Hauptstrom im Extruder 5 der Aufschmelzeinheit entsprechende repräsentative Messung zu erhalten. Die Entnahmeeinheit 1 wird vorteilhaft so ausgeführt, dass diese in den inneren Bereich eines vom einem Extruder abgebundenen Schmelzekanals reicht, um dort eine repräsentative Polymermenge entnehmen zu können.

Die Messeinheit 12 umfasst eine allenfalls austauschbare Messdüse 3 (MFR Düse), die gegebenenfalls aus einer Anzahl von Messdüsen unterschiedlichen Querschnittes auswählbar ist. Ferner ist ein Kolben 6 mit wählbarem bzw. veränderbarem Gewicht bzw. mit einregelbarem Druckkraftgeber 30 in einem gegebenenfalls temperierbaren, das Messvolumen 40 definierenden Zylinder 8 verstellbar angeordnet. Das Gewicht bzw. der Druckkraftgeber 30 belastet über den in den Zylinder 8 eingepassten Kolben 6, der das Polymer 10 durch die Messdüse 3 drückt. Mit der Zeitmesseinheit 21 wird die Zeitdauer des Auspressens des im Messvolumen 40 befindlichen Polymers oder eines vorgegebenen Anteils gemessen.

Zusätzlich zur Messung der Viskosität kann eine Messung der Temperatur und des Drucks der Schmelze erfolgen. Der Zylinder 8 und damit das Messvolumen 40 kann bezüglich seiner Temperatur geregelt, das heißt erwärmt oder gekühlt werden. Für die Temperaturregelung wird die Temperatur des Zylinders 8 gemessen und es kann z.B. mit einer elektrischen Heizung oder Kühlung diese Temperatur eingestellt werden.

Mit Hilfe eines Steuerungssystems 29 oder Computersystems, das die Absperreinheit 2 bzw. die Druckbelastung des Kolbens 6 steuert, kann der Messvorgang automatisiert oder teilautomatisiert werden. Zur Messung der Zeitdauer des Auspressens der Charge, insbesondere um eine Automatisierung vorzunehmen, kann die Bewegung des Kolbens 6, insbesondere die Längsbewegung des Kolbes 6, genau erfasst werden. Damit kann das Volumen an ausgepresstem Polymer exakt vorgegeben bzw. bestimmt werden. Es hat sich als zielführend erwiesen, die zurückgelegte Wegstrecke des Messkolbens 6 kontinuierlich zu erfassen und damit das ausgepresste Volumen zu bestimmen. Dies ermöglicht Anpassungen des Messverfahrens an unterschiedliche Messzeiten, Polymere usw. Dazu wird ein oberer Startpunkt und ein unterer Endpunkt des Kolbens 6 festgelegt bzw. erfasst. Dies kann z.B. durch Passieren eines bestimmten Kolbenpunktes durch eine Lichtschranke erfolgen. Durch Feststellung des zurückgelegten Kolbenweges kann das ausgepresste Volumen der Charge ermittelt werden bzw. das Auspressen einer bestimmten Polymermenge kann durch den Kolbenweg festgelegt werden. Es kann also bei festgelegtem Kolbenweg die Zeitdauer des Auspressens gemessen werden oder es kann die Zeitdauer des Auspressens bei festgelegtem Druck gemessen werden, um die erforderlichen Messwerte zu erhalten.

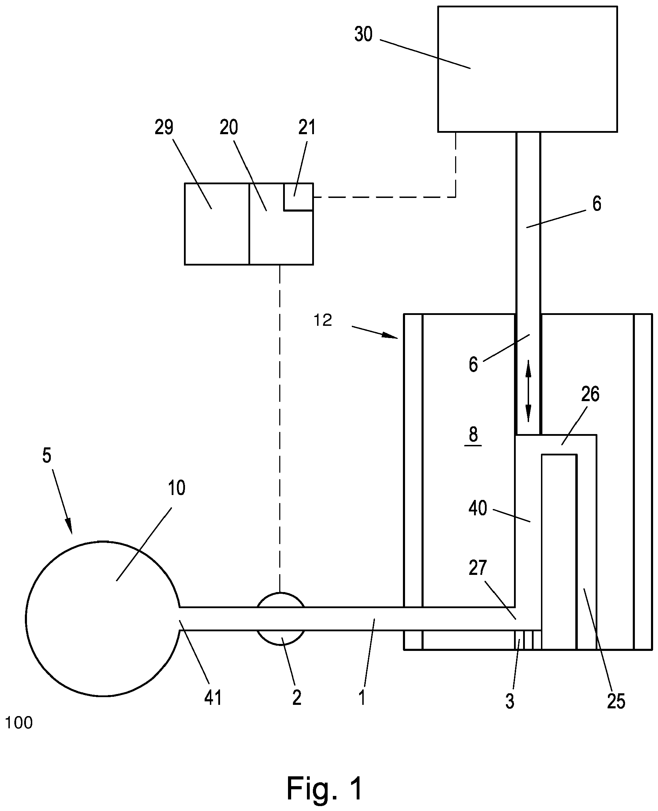

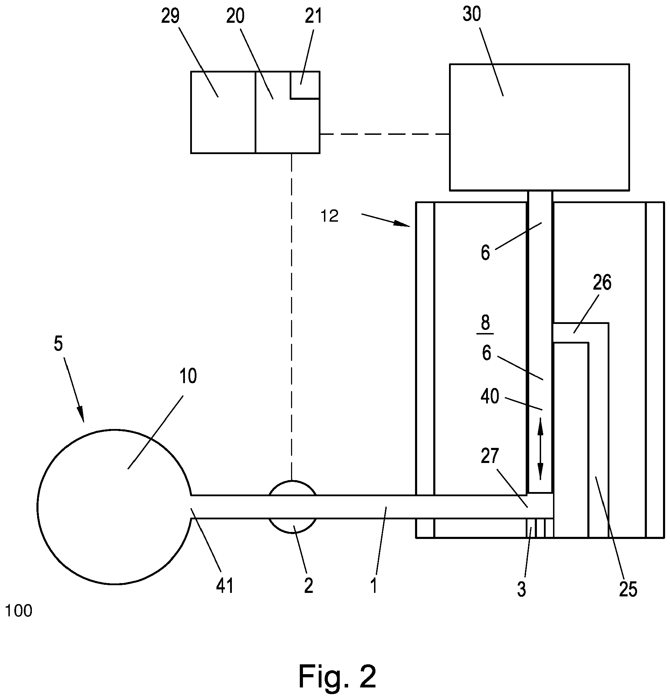

Der Messvorgang kann in der Praxis wie folgt ablaufen:
Die Schmelze vom Verarbeitungssystem, deren Druck durch das dem Extruder folgende bzw. von diesem mit Polymer beaufschlagte Werkzeug bestimmt ist, drückt bei offener Absperreinheit 2 über die Rohrleitung 1 den Messkolben 6 in seine obere Position (Fig. 1) und füllt den Zylinder 8 bzw. das Messvolumen 40. Ist der Kolben 6 in der oberen Position, wird die Zufuhr von Schmelze unterbrochen und der Messvorgang der Charge wird durch Absenken des Kolbens 6 begonnen. Der Kolben 6 kann durch eine Messvorrichtung, insbesonders durch eine mechanische oder hydraulische oder geometrische Messvorrichtung, in seiner oberen Position gehalten werden, bis der Zulauf bzw. die Rohrleitung 1 vollständig abgeschlossen ist. Wenn kein Gegendruck mehr vorhanden ist bzw. der Druck im Messvolumen 40 abgebaut ist, wird der Kolben 6 freigegeben. Dann bewegt sich der Messkolben 6 durch sein Gewicht oder durch Beaufschlagung mit einem Druckkraftgeber 30 nach unten (Fig. 2) und drückt das Polymer durch die Messdüse 3. Die Geometrie der Messdüse 3, die Temperatur des Polymers im Messvolumen 40 und der Kolbendruck werden entsprechend der Norm bzw. gemäß Vorgaben gewählt. Es wird die Zeit erfasst, bis der Kolben 6 einen vorgegebenen oder seinen untersten Punkt erreicht hat. Dazu kann eine Wegmessung vorgenommen werden. Aus den bekannten Geometrien und der gemessenen Zeit kann der MFR (Melt Flow Rate) in g/10min oder MVR (Melt Volume Rate) cm³/10min in Anlehnung an DIN EN ISO 1133-2 berechnet werden. Es ist auch möglich, mit Substanzen bekannter Viskosität die Messeinheit zu kalibrieren. Dann kann die gemessene Zeit direkt der Viskosität proportional gesetzt werden.
Man kann durch die genaue Erfassung der Umgebungsparameter, im Speziellen der Schmelzetemperatur, eine Korrektur der ermittelten Werte vornehmen und damit die von der Norm vorgegebenen Werte erhalten. Grundsätzlich nähert sich die Schmelzetemperatur des Polymers durch seine geringe Menge im Messvolumen 40 der Temperatur des Messzylinders 8 an, welche Temperatur des Messzylinders 8 der Norm entsprechend eingestellt wird.

An Stelle des Gewichtes des Kolbens 6 kann ein Druckkraftgeber 30 eingesetzt werden, der den Kolben 6 mit einer vorgegebenen, gleichbleibenden, gegebenenfalls an die Konsistenz des Polymers angepassten, Druckkraft belastet.

Als positiv hat sich eine Vibrationsentkoppelung zwischen einem Extruder und der Messapparatur bzw. der erfindungsgemäßen Messvorrichtung erwiesen, um eine Veränderung der Bewegungsgeschwindigkeit des Kolbens 6 durch Vibrationen des Extruders zu verhindern. Weiters ist es von Vorteil, wenn sich die Messapparatur bzw. das Messvolumen unabhängig vom Extruder bzw. der Rohrleitung 1 in der Vertikalen einstellen lässt, um auch hier Beeinflussungen der Bewegung des Kolbens 6 durch die Aufstellung zu minimieren.

Weiters hat es sich als positiv erwiesen, für eine thermische Entkopplung gegenüber der Umwelt zu sorgen. Dies kann relativ einfach durch Abdeckungen und geeignete Isolation erfolgen. Da die Temperaturführung ein wichtiges Merkmal für die Präzision der Messung ist, dürfen z.B. weder warme noch kalte Luftströmungen die Temperatur der Messapparatur beeinflussen. Sollte die Temperierung des Zylinders 8 nur mit einer Heizung ausgeführt werden, dann ist für ein natürliche Konvektion zu sorgen, um den Zylinder 8 auch kühlen zu können.

Als vorteilhaft hat es sich bewährt, einen Ableit- bzw. Überlaufkanal 25 vorzusehen, mit dem das Messvolumen 40 bzw. der Zylinder 8 rasch gespült werden kann, wenn sich der Kolben 6 in seiner oberen Position befindet. Diese Reinigung des Messvolumens 40 erlaubt es einen Dauerbetrieb von Tagen, Wochen, Monaten ohne Reinigung der Messapparatur durchzuführen. Durch Verwendung eines automatisierten Messvorgangs kann eine Aufzeichnung der gemessenen Daten vorgenommen und ein Langzeittrend ermittelt werden.

Der Ableitkanal 25 hat eine Mündung 26 im oberen Bereich des Messvolumens 40 und ermöglicht aufgrund seines Querschnitts einen raschen Spülvorgang. Um das Messvolumen 40 möglichst vollständig spülen zu können, wird die Mündung 26 an einem Ende des vorzugsweise langgestreckten, insbesondere zylindrischen, Messvolumens 40, vorzugsweise dem kolbenseitigen Ende, und die Mündung 27 der Rohrleitung 1 am anderen, gegenüberliegenden Ende ausgebildet. Bei Eintritt bzw. Hineinbewegung in das Messvolumen 40 kann der Kolben 6 die Mündung 26 verschließen, um einen unerwünschten Austritt von Polymer zu verhindern, und der Messvorgang kann beginnen.

Durch die Anlehnung der Messapparatur an die Norm erhält man weiters die Möglichkeit, auch Viskositäten von jenen Polymeren zu berechnen, die üblicherweise nicht in MFR oder MVR angegeben werden und wofür entsprechende Umrechnungsformeln oder Modelle existieren. Es kann daher z.B. auch die Viskosität von Polyester gemessen werden.

Besonders hervorzuheben ist die Einfachheit und die Robustheit des Messprinzips bzw. der Messvorrichtung. Aus diesem Grund lässt sich diese Messvorrichtung auch für verschmutzte Kunststoffe, die gröbere Verunreinigungen enthalten, einsetzen.

Die Messung der Viskosität erfolgt an Polymeren mit einer Temperatur oberhalb der Vicat-Erweichungstemperatur, gegebenenfalls innerhalb des Schmelzbereiches des Polymers, vorzugsweise aber in dem Temperaturbereich, in dem das Polymer völlig aufgeschmolzen vorliegt.

Aus Fig. 1 und 2 ist ersichtlich, dass eine Auswerteeinheit 29 zur Berechnung der Viskosität aus den erhaltenen Zeitmesswerten vorgesehen ist, und dass eine Steuereinheit 20 zur Betätigung der Absperreinheit 2 und des Druckkraftgebers 30 vorgesehen ist, mit der die Absperreinheit 2 zu vorgegebenen Zeiten in Öffnungs- oder Schließstellung verstellbar ist, womit der Durchfluss von Polymer 10 zum Messvolumen 40 steuerbar und dieses Polymer zu Spül- oder Messzwecken einsetzbar ist. Die Rohrleitung 1 ist bei 41 an die Verarbeitungseinheit 100 bzw. die Aufschmelzeinheit 5 angeschlossen.

## Patentansprüche

1. Verfahren zur Onlinebestimmung der Viskosität eines sich in einer Verarbeitung, insbesondere Extrusion, befindlichen, in teigiger bis flüssiger Form vorliegenden Polymers,
- wobei zur Onlinebestimmung der Viskosität des Polymers (10) zumindest eine Charge, vorzugsweise laufend hintereinander in zeitlichen Abständen eine Anzahl von Charge(n), von dem sich in Verarbeitung befindlichen Polymer mit einer Entnahmeeinheit abgezweigt und dem Messvolumen (40) einer Messeinheit (12) zugeführt wird,
- wobei ein vorbestimmtes Volumen der jeweiligen Charge durch Beaufschlagung der Charge mit einem vorgegebenen Druck durch eine in der Messeinheit ausgebildete Messdüse (3), gegebenenfalls mit einem mit einer vorgegebenen, vorzugsweise gleichbleibenden, Kraft beaufschlagten Kolben (6), aus dem Messvolumen (40) ausgepresst wird,
- wobei die Zeitdauer für das Auspressen des vorbestimmten Volumens der Charge durch die Messdüse (3) gemessen wird, und
- wobei vor dem Füllen des Messvolumens (40) mit dem zu vermessenden Polymer (10) das Messvolumen (40) und gegebenenfalls auch die Zuleitung für das Polymer (10) zum Messvolumen (40) mit einer Menge des zu verarbeitenden Polymers zumindest einmal gespült wird, **dadurch gekennzeichnet,**
- **dass** der ermittelte Messwert für die Berechnung der Viskosität des Polymers (10) herangezogen wird, und
- **dass** das zum Spülen eingesetzte Polymer (10) aus dem Messvolumen (40) über einen an das Messvolumen (40) angeschlossenen Ableitkanal (25) abgeleitet wird, wobei die Mündung (27) der von einer Rohrleitung (1) gebildeten Entnahmeeinheit und die Mündung (26) des Ableitkanals (25) an entgegengesetzten Endbereichen des Messvolumens (40) angeordnet werden.

2. Verfahren nach Anspruch 1, **dadurch gekennzeichnet, dass** der Ableitkanal (25) im oberen Bereich des Messvolumens (40) oder in dem der Messdüse (3) gegenüberliegenden Endbereich des Messvolumens (40) gelegen ist.

3. Verfahren nach Anspruch 1 oder 2, **dadurch gekennzeichnet, dass** das zum Spülen eingesetzte Polymer (10) durch den Druck dem Messvolumen (40) zugeführt wird, den es bei seiner Verarbeitung an seiner Abzweigstelle (41) besitzt.

4. Verfahren nach einem der Ansprüche 1 bis 3, **dadurch gekennzeichnet, dass** bei Beendigung des Spülvorganges die Zufuhr des Polymers (10) zum Messvolumen (4o) gestoppt und entweder weiteres Polymer (10) abgezweigt und dem Messvolumen (40) zugeführt und durch die Messdüse (3) ausgepresst wird oder als zu vermessende Charge das noch im Messvolumen (40) befindliche Polymer (10) des Spülvorganges als abgezweigte Charge durch die Messdüse (3) ausgepresst und die Zeitdauer des Auspressens gemessen wird.

5. Verfahren nach einem der Ansprüche 1 bis 4, **dadurch gekennzeichnet, dass** das Messvolumen (40) und gegebenenfalls der Ableitkanal (25) mit einer Menge an Polymer (10) gespült wird, die größer als das Volumen des Messvolumens (40) und des von der Abzweigstelle (41) bis zum Messvolumen (40) führenden Zuleitungskanals (1) ist und gegebenenfalls doppelt so groß ist wie diese beiden Volumen zusammen.

6. Verfahren nach einem der Ansprüche 1 bis 5, **dadurch gekennzeichnet, dass** die Zufuhr des Polymers (10) zum Messvolumen (40) im unteren Endbereich des Messvolumens (40) und die Abfuhr des zum Spülen eingesetzten Polymers (10) im oberen Endbereich des Messvolumens (40) erfolgt.

7. Verfahren zur Verarbeitung, insbesondere zur Recycling-Verarbeitung, eines Polymers, wobei das Polymer aufgeschmolzen wird und das Verfahren zur Onlinebestimmung der Viskosität des Polymers gemäß einem der Ansprüche 1 bis 6 eingesetzt wird.

8. Verfahren nach Anspruch 7, **dadurch gekennzeichnet, dass** die ermittelten Messwerte für die Steuerung des Verarbeitungsverfahrens, insbesondere des Aufschmelzvorganges des Polymers, und/oder für die Steuerung des Extruders, insbesondere seiner Drehzahl, verwendet werden, wobei gegebenenfalls eine Beeinflussung eines nachgeordneten Schmelzeventils oder einer nachgeordneten Granulatweiche vorgenommen wird und das erzeugte Polymer entsprechend seiner Viskosität ausgeschieden oder sortiert wird.

9. Messvorrichtung zur Onlinebestimmung der Viskosität eines sich in einer Verarbeitung, insbesondere Extrusion, befindlichen, in teigiger bis flüssiger Form vorliegenden Polymers zur Durchführung des Verfahrens nach einem der Ansprüche 1 bis 8,
- wobei eine an eine Aufschmelzeinheit (5) anschließbare von einer Rohrleitung (1) gebildete Entnahmeeinheit zur Entnahme von Chargen des in teigiger bis flüssiger Form vorliegenden Polymers (10) vorgesehen ist,
- wobei die Entnahmeeinheit über eine Absperreinheit (2) an eine, ein vorzugsweise langgestrecktes, Messvolumen (40) umfassende Messeinheit (12) angeschlossen ist, die eine Messdüse (3) aufweist, durch die die dem Messvolumen (40) zugeführte Charge zur Gänze oder zu einem vorgegebenen Teil durch Druckbelastung mit einem Druckkraftgeber (30) aus dem Messvolumen (40) auspressbar ist,
- wobei eine Zeitmesseinheit (21) vorgesehen ist zur Messung der Zeitdauer des Auspressens der vorgegebenen Menge an Polymer (10) durch die Messdüse (3),
- wobei eine Steuereinheit (20) zur Betätigung der Absperreinheit (2) und des Druckkraftgebers (30) vorgesehen ist, mit der die Absperreinheit (2) zu vorgegebenen Zeiten in Öffnungs- oder Schließstellung verstellbar ist, womit der Durchfluss von Polymer (10) zum Messvolumen (40) steuerbar und dieses Polymer zu Spül- oder Messzwecken einsetzbar ist, und
- wobei die Messdüse (3) in einem Bereich des Messvolumens (40) gelegen ist, der dem Druckkraftgeber (30) gegenüberliegt, **dadurch gekennzeichnet,**
- **dass** eine Auswerteeinheit (29) zur Berechnung der Viskosität aus dem erhaltenen Zeitmesswert vorgesehen ist,
- **dass** an das Messvolumen (40) ein Ableitkanal (25) für zum Spülen eingesetztes Polymer (10) angeschlossen ist, und
- **dass** die Mündung (27) der Rohrleitung (1) der Entnahmeeinheit und die Mündung (26) des Ableitkanals (25) an entgegengesetzten Endbereichen des Messvolumens (40) liegen.

10. Messvorrichtung nach Anspruch 9, **dadurch gekennzeichnet, dass** der Druckkraftgeber ein in dem Messvolumen hin- und herbewegbarer Kolben (5, 6) ist.

11. Messvorrichtung nach Anspruch 9 oder 10, **dadurch gekennzeichnet, dass** die Mündung (26) des Ableitkanals (25) im oberen Endbereich des Messvolumens (40) liegt.

12. Messvorrichtung nach einem der Ansprüche 9 bis 11, **dadurch gekennzeichnet, dass** die Mündung der Rohrleitung (1) und die Messdüse (3) im unteren Endbereich des Messvolumens (40) liegen.

13. Messvorrichtung nach einem der Ansprüche 9 bis 12, **dadurch gekennzeichnet, dass** die Mündung (26) des Ableitkanals (25) von dem Kolben (6) des Druckkraftgebers (30) zu Beginn der Bewegung des Kolbens (6) in das Messvolumen (40) verschließbar ist.

14. Messvorrichtung nach einem der Ansprüche 9 bis 13, **dadurch gekennzeichnet, dass** die Messdüse (3) und die Mündung (26) des Ableitkanals (25) in einander vertikal entgegengesetzten Endbereichen des Messvolumens (40) angeordnet sind.

15. Messvorrichtung nach einem der Ansprüche 9 bis 14 mit einer angeschlossenen Aufschmelzeinheit (5) für das Polymer (10), vorzugsweise einem Extruder.

16. Messvorrichtung nach Anspruch 15, **dadurch gekennzeichnet, dass** der Aufschmelzeinheit (5) eine Granulatweiche oder ein Schmelzventil nachgeordnet ist, der bzw. dem das hinsichtlich seiner Viskosität vermessene Polymer zuführbar ist.

## Claims

1. Method for the online determination of the viscosity of a polymer during processing, especially extrusion, in a pasty to liquid form,
- wherein for the online determination of the viscosity of the polymer (10) at least one batch, preferably a number of batches following one another at time intervals, is diverted from the polymer being processed by an extraction unit and conveyed to the measurement volume (40) of a measuring unit (12),
- wherein a specified volume of the respective batch is expelled from the measurement volume (40) by subjecting the batch to a predetermined pressure through a measuring nozzle (3) formed in the measuring unit, optionally with a piston (6) to which a predetermined force, preferably a constant force, is applied,
- wherein the time required for expelling the specified volume of the batch through the measuring nozzle (3) is measured, and
- wherein before the measurement volume (40) is filled with the polymer (10) to be measured, the measurement volume (40) and optionally also the feed line for the polymer (10) into the measurement volume (40) is flushed at least once with a quantity of the polymer to be processed, **characterised in that**
- the measured value determined for calculating the viscosity of the polymer (10) is used, and
- the polymer (10) used for flushing is diverted from the measurement volume (40) via a discharge channel (25) connected to the measurement volume (40), wherein the orifice (27) of the extraction unit formed by a pipeline (1) and the orifice (26) of the discharge channel (25) are arranged at opposite ends of the measurement volume (40).

2. Method according to claim 1, **characterised in that** the discharge channel (25) is located in the upper region of the measurement volume (40) or in the end region of the measurement volume (40) opposite the measuring nozzle (3).

3. Method according to claim 1 or 2, **characterised in that** the polymer (10) used for flushing is conveyed to the measurement volume (40) by the pressure that it has during its processing at its diversion site (41).

4. Method according to any of claims 1 to 3, **characterised in that** on ending the flushing process the feeding of the polymer (10) to the measurement volume (40) is stopped and either additional polymer (10) is diverted and conveyed to the measurement volume (40) and expelled through the measuring nozzle (3) or as the batch to be measured, the polymer (10) from the flushing process still located in the measurement volume (40) is expelled through the measuring nozzle (3) as the diverted batch, and the time for expulsion is measured.

5. Method according to any of claims 1 to 4, **characterised in that** the measurement volume (40) and optionally the discharge channel (25) is flushed with a quantity of polymer (10) which is greater than the volume of the measurement volume (40) and of the feed channel (1) leading from the diversion site (41) to the measurement volume (40) and optionally is twice the size of both these volumes.

6. Method according to any of claims 1 to 5, **characterised in that** the feed of the polymer (10) to the measurement volume (40) takes place in the lower end region of the measurement volume (40) and the removal of the polymer (10) used for flushing takes place in the upper end region of the measurement volume (40).

7. Method for processing, especially for recycling-processing, a polymer, wherein the polymer is melted and the method for the online determination of the viscosity of the polymer according to any of claims 1 to 6 is used.

8. Method according to claim 7, **characterised in that** the measured values determined for controlling the processing method, especially the polymer melting process, and/or for controlling the extruder, especially its rotational speed, are used, wherein optionally an effect is produced on a downstream melt valve or a downstream granulate separator and the polymer produced is segregated or sorted according to its viscosity.

9. Measuring device for the online determination of the viscosity of a polymer undergoing processing, especially extrusion, in pasty to liquid form used for carrying out the process according to any of claims 1 to 8,
- wherein an extraction unit connectable by a pipeline (1) to a melting unit (5) is provided for extracting batches of the polymer (10) in pasty to liquid form,
- wherein the extraction unit is connected via a blocking unit (2) to a measurement unit (12) comprising a preferably elongated measurement volume (40), having a measuring nozzle (3) through which all or a predetermined fraction of the batch conveyed to the measurement volume (40) can be expelled from the measurement volume (40) by applying pressure with a pressure generator (30),
- wherein a time measuring unit (21) is provided for measuring the duration of the expulsion of the predetermined quantity of polymer (10) through the measuring nozzle (3),
- wherein a control unit (20) is provided for actuating the blocking unit (2) and the pressure generator (30), with which the blocking unit (2) can be moved into the opening or closing position at predetermined times, whereby the flow of polymer (10) to the measurement volume (40) can be controlled and this polymer can be used for flushing or measurement purposes, and
- wherein the measuring nozzle (3) is located in a region of the measurement volume (40) which is opposite the pressure generator (30), **characterised in that**
- an evaluation unit (29) is provided for calculating the viscosity from the time measurement value obtained,
- a discharge channel (25) for flushing used polymer (10) is connected to the measurement volume (40), and
- the orifice (27) of the pipeline (1) of the extraction unit and the orifice (26) of the discharge channel (25) are located at opposite end regions of the measurement volume (40).

10. Measuring device according to claim 9, **characterised in that** the pressure generator is a piston (5, 6) that can be moved back and forth in the measurement volume.

11. Measuring device according to claim 9 or 10, **characterised in that** the orifice (26) of the discharge channel (25) is located in the upper end region of the measurement volume (40).

12. Measuring device according to any of claims 9 to 11, **characterised in that** the orifice of the pipeline (1) and the measuring nozzle (3) are located in the lower end region of the measurement volume (40).

13. Measuring device according to any of claims 9 to 12, **characterised in that** the orifice (26) of the discharge channel (25) can be closed by the piston (6) of the pressure generator (30) at the beginning of the movement of the piston (6) into the measurement volume (40).

14. Measuring device according to any of claims 9 to 13, **characterised in that** the measuring nozzle (3) and the orifice (26) of the discharge channel (25) are arranged in end regions of the measurement volume (40) opposite one another in vertical direction.

15. Measuring device according to any of claims 9 to 14, with a connected melting unit (5) for the polymer (10), preferably an extruder.

16. Measuring device according to claim 15, **characterised in that** a granulate separator or a melt valve, to which the polymer can be conveyed for which the viscosity has been measured, is arranged downstream of the melting unit (5).

## Revendications

1. Procédé de détermination en ligne de la viscosité d'un polymère présent sous forme pâteuse à liquide se trouvant dans un traitement, en particulier une extrusion,
- dans lequel pour la détermination en ligne de la viscosité du polymère (10), au moins un lot, de préférence un nombre de lots circulant les uns après les autres à des intervalles de temps, est dévié du polymère en cours de traitement avec une unité de prélèvement et acheminé vers le volume de mesure (40) d'une unité de mesure (12),
- dans lequel un volume prédéfini du lot respectif est pressé hors du volume de mesure (40) en soumettant le lot à une pression prédéterminée à travers une buse de mesure (3) formée dans l'unité de mesure, éventuellement avec un piston (6) auquel est appliquée une force prédéterminée, de préférence une force constante,
- dans lequel le temps nécessaire pour presser le volume spécifié du lot à travers la buse de mesure (3) est mesuré, et
- dans lequel avant que le volume de mesure (40) soit rempli du polymère à mesurer, le volume de mesure (40), et éventuellement également la ligne d'alimentation pour le polymère (10) dans le volume de mesure (40), est rincé au moins une fois avec une quantité du polymère à traiter, **caractérisé en ce que**
- la valeur de mesure déterminée est utilisée pour calculer la viscosité du polymère (10), et
- le polymère (10) utilisé pour le rinçage est dévié du volume de mesure (40) par un canal de décharge (25) raccordé au volume de mesure (40), dans lequel l'ouverture (27) de l'unité de prélèvement formée par un conduit (1) et l'ouverture (26) du canal de décharge (25) sont agencées sur des zones terminales opposées du volume de mesure (40).

2. Procédé selon la revendication 1, **caractérisé en ce que** le canal de décharge (25) est situé dans la zone supérieure du volume de mesure (40) ou dans la zone terminale opposée à la buse de mesure (3) du volume de mesure (40).

3. Procédé selon la revendication 1 ou 2, **caractérisé en ce que** le polymère (10) utilisé pour le rinçage est acheminé vers le volume de mesure (40) par la pression qu'il présente lors de son traitement au niveau de son site de déviation (41).

4. Procédé selon l'une quelconque des revendications 1 à 3, **caractérisé en ce que** lors de la fin du processus de rinçage, l'alimentation du polymère (10) vers le volume de mesure (4o) est arrêtée et soit un autre polymère (10) est dévié et transporté vers le volume de mesure (40) et pressé à travers la buse de mesure (3), soit le polymère (10) se trouvant encore dans le volume de mesure (40) en tant que lot à mesurer provenant du processus de rinçage est pressé en tant que lot dévié à travers la buse de mesure (3) et le temps de pressage est mesuré.

5. Procédé selon l'une quelconque des revendications 1 à 4, **caractérisé en ce que** le volume de mesure (40), et éventuellement le canal de décharge (25), est rincé avec une quantité de polymère (10) qui est supérieure au volume du volume de mesure (40) et du canal d'alimentation (1) allant du site de dérivation (41) au volume de mesure (40) et éventuellement deux fois plus grand que ces deux volumes ensemble.

6. Procédé selon l'une quelconque des revendications 1 à 5, **caractérisé en ce que** l'alimentation du polymère (10) vers le volume de mesure (40) a lieu dans la zone terminale inférieure du volume de mesure (40) et l'évacuation du polymère (10) utilisé pour le rinçage a lieu dans la zone terminale supérieure du volume de mesure (40).

7. Procédé de traitement, en particulier pour le traitement-recyclage, d'un polymère dans lequel le polymère est fondu et le procédé de détermination en ligne de la viscosité du polymère est utilisé selon l'une quelconque des revendications 1 à 6.

8. Procédé selon la revendication 7, **caractérisé en ce que** les valeurs de mesure déterminées pour la commande du procédé de traitement, en particulier du processus de fusion du polymère, et/ou pour la commande de l'extrudeuse, en particulier sa vitesse de rotation, sont utilisées, éventuellement un effet sur une vanne de fusion aval ou un séparateur de granulés aval étant produit et le polymère obtenu étant séparé ou trié en fonction de sa viscosité.

9. Dispositif de mesure pour la détermination en ligne de la viscosité d'un polymère présent sous forme pâteuse à liquide se trouvant dans un traitement, en particulier une extrusion, pour la mise en œuvre du procédé selon l'une des revendications 1 à 8,
- dans lequel une unité de prélèvement formée d'un conduit (1) pouvant être raccordé à une unité de fusion (5) est prévue pour le prélèvement des lots du polymère (10) présent sous forme pâteuse à liquide,
- dans lequel l'unité de prélèvement est raccordée via une unité de blocage (2) à une unité de mesure (12) entourant de préférence un volume de mesure (40) allongé, laquelle comporte une buse de mesure (3) à travers laquelle l'ensemble du lot ou une partie spécifiée du lot amené au volume de mesure (40) peut être pressé hors du volume de mesure (40) par application de pression avec un générateur de pression (30),
- dans lequel une unité de mesure du temps (21) est prévue pour la mesure du temps de pressage de la quantité spécifiée de polymère (10) à travers la buse de mesure (3),
- dans lequel une unité de commande (20) est prévue pour l'actionnement de l'unité de blocage (2) et du générateur de pression (30), avec laquelle l'unité de blocage (2) est réglable dans la position d'ouverture ou de fermeture à des moments prédéterminés , ce qui permet de commander le débit de polymère (10) vers le volume de mesure (40) et d'utiliser ce polymère à des fins de rinçage ou de mesure, et
- dans lequel la buse de mesure (3) est située dans une zone du volume de mesure (40) qui est opposée au générateur de pression (30), **caractérisé en ce que**
- une unité d'évaluation (29) est prévue pour le calcul de la viscosité à partir de la valeur de mesure du temps obtenue,
- un canal de décharge (25) pour le polymère (10) utilisé pour le rinçage est raccordé au volume de mesure (40), et
- l'ouverture (27) du conduit (1) de l'unité de prélèvement et l'ouverture (26) du canal de décharge (25) sont situées sur des zones terminales opposées du volume de mesure (40).

10. Dispositif de mesure selon la revendication 9, **caractérisé en ce que** le générateur de pression est un piston (5, 6) déplaçable en va-et-vient dans le volume de mesure.

11. Dispositif de mesure selon la revendication 9 ou 10, **caractérisé en ce que** l'ouverture (26) du canal de décharge (25) est située dans la zone terminale supérieure du volume de mesure (40).

12. Dispositif de mesure selon l'une quelconque des revendications 9 à 11, **caractérisé en ce que** l'ouverture du conduit (1) et la buse de mesure (3) sont situées dans la zone terminale inférieure du volume de mesure (40).

13. Dispositif de mesure selon l'une quelconque des revendications 9 à 12, **caractérisé en ce que** l'ouverture (26) du canal de décharge (25) peut être fermée par le piston (6) du générateur de pression (30) au début du mouvement du piston (6) dans le volume de mesure (40).

14. Dispositif de mesure selon l'une quelconque des revendications 9 à 13, **caractérisé en ce que** la buse de mesure (3) et l'ouverture (26) du canal de décharge (25) sont agencées dans des zones terminales opposées verticalement du volume de mesure (40).

15. Dispositif de mesure selon l'une quelconque des revendications 9 à 14 comprenant une unité de fusion (5) raccordée pour le polymère (10), de préférence une extrudeuse.

16. Dispositif de mesure selon la revendication 15, **caractérisé en ce que** l'unité de fusion (5) présente, en aval de celle-ci, un séparateur de granulés ou une vanne de fusion, auquel peut être acheminé le polymère dont la viscosité a été mesurée.
